# EUROPÄISCHE PATENTSCHRIFT

(11) **EP 0 566 874 B1**
(45) Veröffentlichungstag und Bekanntmachung des Hinweises auf die Patenterteilung: **17.06.1998**
(21) Anmeldenummer: 93104557.9
(22) Anmeldetag: 19.03.1993
(51) Int. Cl.: H04Q 7/24, H04Q 7/30

(54) **Zellulares Mobilfunksystem**
Cellular mobile radio system
Système radio-mobile cellulaire

(30) Priorität: 24.04.1992 DE 4213624
(43) Veröffentlichungstag der Anmeldung: 27.10.1993
(73) Patentinhaber: SIEMENS AKTIENGESELLSCHAFT, 80333 München (DE)
(72) Erfinder: Sanne, Martin, W-8000 München 80 (DE); Heger, Wilhelm, W-8911 Windach (DE); Ritter, Gerhard, W-8911 Taining (DE); Färber, Michael, W-8000 München 21 (DE); Croft, Alan-P., Roke Manor, 8051 7UB (GB)

(56) Entgegenhaltungen:
- 41ST IEEE VEHICULAR TECHNOLOGY CONFERENCE, ST. LOUIS 19. Mai 1991, NEW-YORK (US) Seiten 642 - 645 K. KONISHITA ET AL 'DEVELOPMENT OF A TDMA DIGITAL CELLULAR SYSTEM BASED ON JAPANESE STANDARD'
- 8TH EUROPEAN CONFERENCE ON ELECTROTECHNICS, EUROCON 88 13. Juni 1988, STOCKHOLM (SE) Seiten 470 - 473 S. HANSEN ET AL 'THE GSM BASE STATION SYSTEM AND THE RELATED EQUIPMENT'
- ELECTRICAL COMMUNICATION Bd. 63, Nr. 1, Juni 1989, ROMFORD (GB) Seiten 45 - 51
- M. BALLARD ET AL 'ECR900 Digital Cellular Mobile Radio System'

## Beschreibung

Die Erfindung bezieht sich auf ein zellulares Mobilfunksystem mit Mobilvermittlungsstellen (MSC = Mobil Switching Center) als Bindeglied zwischen Mobilfunknetz und stationärem Telefonnetz, bei dem eine große Anzahl von Basisstationen (BS) über Basisstations-Controller (BSC = Base Station Controller) an eine Mobilvermittlungsstelle angeschlossen ist.

Die Mobilvermittlungsstelle ist die Fernsprechvermittlungsstelle für Teilnehmergespräche, die im Mobilfunknetz entspringen oder dort enden und steuert den Verbindungsaufbau in ähnlicher Weise wie ein Amt im leitungsgebundenen Fernsprechnetz. Die Basisstation bildet die Funkschnittstelle zwischen dem mobilen Teilnehmer und dem Festnetz und behandelt Aspekte der Funkverbindung, während der Basisstations-Controller (BSC) die Steuerung und Funkversorgung durchführt. Ein Basisstations-Controller kann dabei mehrere Basisstationen steuern.

Das für Funkverbindungen vorhandene Frequenzspektrum hat bekanntlich einen begrenzten Vorrat, so daß eine Aufteilung zwischen den verschiedenen Formen der Nachrichtenübertragung auf dem Funkweg erfolgen muß. Es ist daher eine Abstimmung zu treffen zwischen der Einführung höherer Bandbreiten pro Verbindung und der Kapazität des Systems. In anderen Worten, für ein bestimmtes Frequenzspektrum gilt: Je höher die erforderliche Bandbreite pro Verbindung, desto niedriger wird die Kapazität des gesamten Systems im Hinblick auf Erlang des Verkehrs pro km².

Mit steigenden Anforderungen an die Netzwerkkapazität und Servicequalität sind daher große Anstrengungen zu unternehmen, die Systemkapazität und Datenraten über die Luftschnittstelle zu steigern. Dies erfordert die Anwendung neuer Funkzugriffstechniken wie die kommerzielle Ausführung von CDMA (Code-Division Multiple Access) oder neue TDMA (Time-Division Multiple Access)-Techniken. Beides hat direkte Ausswirkungen auf die Komplexität der Funkübertragung- und Signalverarbei-tungseinrichtungen. So wird beispielsweise eine leistungsstärkere Signalverarbeitung erforderlich sein, um Gleichkanalstörungen zwischen Kanälen an der Luftschnittstelle zu reduzieren oder das orginal übertragene Signal aus dem Umgebungsgeräusch zurückzugewinnen.

Bei zellularen Systemen mit hoher Kapazität besteht ein Problem darin, daß mit kleiner werdenden Zellen die fest verdrahtete Infrastruktur immer komplexer wird, die erforderlich ist zur Verbindung der Basisstationen mit den Schalteinrichtungen (Switch). Es ist eine sehr präzise Netzwerkplanung nötig, um die Netzwerkkosten in bezug zur Netzwerkeffizienz zu optimieren. Die zunehmende Komplexität zellularer Mobilfunksysteme kann dazu führen, daß eine neue Funktionalität in die vom Vermittlungssystem entferntesten Systemkomponenten, nämlich die Basisstation, einzubringen sind. Dies hat einen Anstieg in komplizierten weit auseinanderliegenden Systemknoten zur Folge, woraus ein erhöhter Aufwand für die Unterhaltskosten resultiert.

Aus dem Artikel von K. Kinoshita et al. (,,Development of a TDMA Digital Cellular System based on Japanese Standard", 41st IEEE Vehicular Technology Conference St. Louis, Mai 1991, S. 642-645), ist es bekannt, daß eine Basisstation normaler Größe eines zellularen Mobilfunksystems sowohl Sendeund Empfangsmittel als auch Modulations- und Demodulationsmittel sowie Basisstationssteuermittel aufweist. Auf Grund eines begrenzten Platzangebotes bei kleinen Basisstationen bzw. Mikro-Basisstationen können die Basisstationssteuermittel und evtl. zusätzlich die Einrichtungen zur Modulation und Demodulation aus der Basisstation ausgelagert und in eine Mobilvermittlungsstelle integriert werden.

Aus dem Artikel von S. Hansen et al. ("The GSM Base Station System and the related equipment", 8th European Conference on Electrotechnics, EUROCON 88, Juni 1988, S. 470-473) ist es ferner bekannt, daß in dem funktechnischen Teilsystem eines GSM-Mobilfunksystems auf der Schnittstelle (A-bis) zwischen einer Basisstations-Steuerung und mehreren Basisstationen eine Funktionsaufteilung in der nach dem GSM-Standard bekannten Weise erfolgt. Nicht an Echtzeitbedingungen geknüpfte Funktionen werden von der Basisstations-Steuerung übernommen, während echtzeitabhängige Prozesse von den jeweiligen Basisstationen durchgeführt werden. Die Basisstationen führen demnach auch kanalorientierte, radiofrequenzunabhängige Funktionen wie Kodierung/ Dekodierung oder Verschlüsselung/ Entschlüsselung aus.

Der Erfindung liegt die Aufgabe zugrunde, für ein Mobilfunksystem der eingangs beschriebenen Art eine der ansteigenden Komplexität der Basisstationseinrichtungen gerecht werdende, einfache Lösung anzugeben.

Diese Aufgabe wird gemäß der Erfindung gelöst durch eine Zusammenlegung von Geräteteilen (equipment pooling) der Basisstationen für Funktionen RF- unabhängiger Komponenten im Basisbandbereich in der Weise, daß die Zusammenlegung an einen zentralen Ort innerhalb der betreffenden Basisstation oder bei den Vermittlungseinrichtungen (Base Station Controller, Mobile Switching Center) erfolgt.

Die erfindungsgemäßen Maßnahmen beinhalten also eine Funktionsaufteilung innerhalb der Basisstation, die ein Zusammenlegen von teuren Systemteilen erlaubt. Somit werden nur einfache, robuste radiofrequenzspezifische Systemteile wie der Leistungsverstärker und Anteile des Empfängers in die Nähe der Antennensysteme gesetzt. Die teuren Systemteile wie z.B. die basisbandverarbeitenden Signalprozessoren, die die kanalorientierte Verarbeitung (Kodierung, Verschlüsselung, Fehlerkorrektur) vornehmen, können zusammengelegt werden.

Die Vorteile eines solchen Zusammenlegens bestehen vor allem in einer Reduzierung der Netzanschaffungskosten durch Herabsetzung der Anzahl komplizierter Netzkomponenten, in einer Reduzierung der Netzunterhaltungskosten/Betriebskosten durch Zentralisierung komplexer Verfahrenshardware. Ferner ist eine größere Flexibilität in der Netzplanung gegeben, weil kostengünstig gewisse Extra-Kapazitäten im Netz vorgeleistet werden können, indem teure Komponenten zusammengelegt und optimal ausgenutzt werden.

Der höchste Gewinn beim Zusammenlegen wird für den Fall erwartet, daß viele kleine Funkterminals (RT) in einem Gebiet hoher Verkehrsdichte plaziert sind.

Ein anderer indirekter Vorteil des Zusammenlegens besteht in der Möglichkeit, mehr Steuereinrichtungen in der Vermittlungseinrichtung (switch) zu plazieren, so daß einige dem Funkzugriff anhaftende Probleme, wie z.B. die Verzögerung, beseitigt werden. Dies erfolgt durch Unterscheidung zwischen dem Verbindungstyp. Wenn angenommen wird, daß in Zukunft ein höherer Anteil aller Anrufe drahtlos-Zugriff zu drahtlos-Zugriff sein wird, dann kann dies in einer speziellen Weise behandelt werden. Ein drahtlos-zu-drahtlos-Ruf würde keine Echobeseitigung erfordern und es wäre nicht nötig, die niedrige Bitrate der Luftschnittstelle auf eine Zwischenbit-Rate von 64 kbit/s für die Übertragung über ein Festnetzwerk zu codieren.

Vorteilhafte Weiterbildungen und Ausgestaltungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:
- Fig. 1: eine Teildarstellung eines zellularen Mobilfunksystems im Blockschaltbild mit verschiedenen Möglichkeiten der Zusammenlegung von Geräteteilen und
- Fig. 2: einen Netzwerkaufbau in einer Teildarstellung.

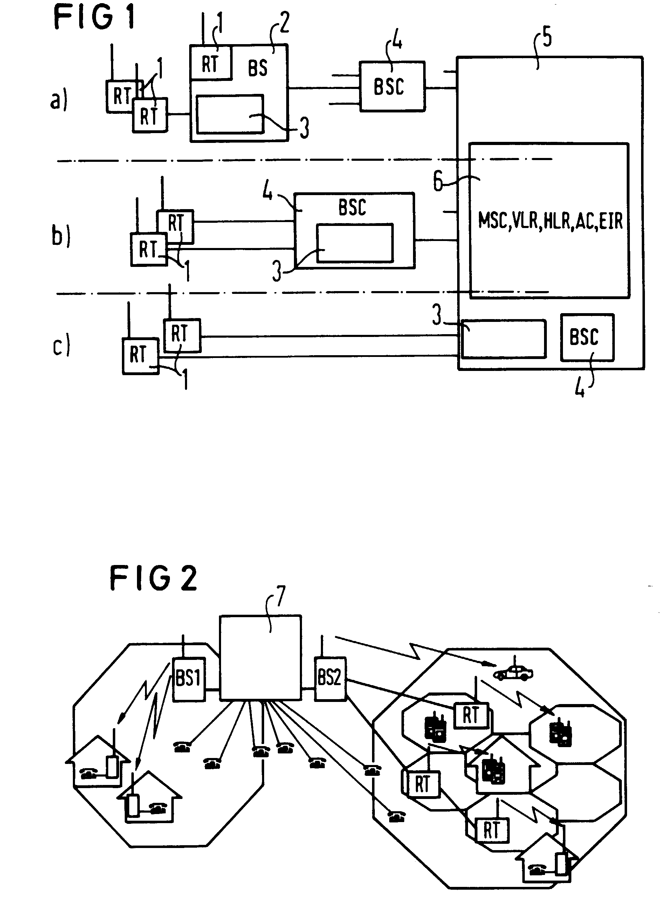

Figur 1 zeigt eine Darstellung mit drei verschiedenen Varianten für die Anordnung zusammengelegter Geräteteile einer Basisstationen. Die rechts im Blockschaltbild liegende Schalteinrichtung 5 (Switching Equipment) ist allen drei Varianten gemeinsam. Innerhalb des großen Kastens ist in der Mitte ein kleinerer Kasten 6 eingezeichnet, der die Mobilvermittlungsstelle MSC (Mobile Switching Center), eine Besucherdatei VLR (Visited Location Register), eine Heimatdatei HLR (Home Location Register), ein Autentisierungsszentrum AC (Authentication Center) und eine Einrichtung Identifikationsregister EIR (Equipment Identification Register) enthält. Alle diese Einrichtungen sind für jede der verschiedenen Varianten vorgesehen.

Bei Variante a) sind die zusammengelegten Geräteteile in der Basisstation BS (Base Station)2angeordnet. Dies ist durch ein Kästchen 3 innerhalb des für die Basisstation vorgesehenen Kastens 2 dargestellt. Die Basisstation BS enthält ferner ein mit einfachen Funktionen ausgestattetes Funkterminal RT (Radio Terminal) 1, das durch ein weiteres kleines Kästchen dargestellt ist. Eine solche Basisstation mit zusammengelegten Geräteteilen ist mehreren einfachen Funkterminals RT zugeordnet, die in weiteren kleinen Kästchen links von der Basisstation 2 eingezeichnet sind. Die Verbindung von Basisstation BS zur Schalteinrichtung 5 erfolgt über einen Basisstations-Controller BSC (Base Station Controller) 4.

Bei der in der mittleren Ebene von Figur 1 dargestellten Variante b) sind die zusammengelegten Geräteteile im Basisstations-Controller BSC 4 angeordnet. Hierbei sind lediglich Funkterminals RT mit einfachen Funktionen vorgesehen, die über den Basisstations-Controller BSC mit der Schalteinrichtung 5 in Verbindung stehen.

Bei der dritten Variante c) sind die zusammengelegten Geräteteile ebenso wie der Basisstations-Controller BSC in der Schalteinrichtung mitenthalten, wofür die beiden im unteren Bereich der Schalteinrichtung 5 eingetragenen Kästchen 3,4 vorgesehen sind. Die Funkterminals RT stehen hierbei direkt mit der Schalteinrichtung in Verbindung, in der zu den vorstehend genannten üblichen Einrichtungen zusätzlich die zusammengelegten Geräteteile sowie der Basisstations-Controller BSC integriert sind.

Figur 2 zeigt einen Netzaufbau mit einer lokalen Vermittlungseinrichtung 7 (Ortsvermittlungsstelle), an die zwei Basisstationen BS1 und BS2 sowie auch festverdrahtete Teilnehmer angeschlossen sind. Die auf der linken Seite des Bildes innerhalb einer großen Zelle angeordnete Basisstation BS1 steht mit Teilnehmeranschlüssen in diesem Bereich in Funkverbindung, während die rechts angeordnete Basisstation BS2 eine Verbindung zu Teilnehmern in einer Großzelle, die wiederum eine Vielzahl von Kleinzellen enthält, herstellt. Die Basisstation BS2 steht dabei mit Mobilstationen über Funk in Verbindung oder drahtgebunden mit lediglich Radiofrequenzeinrichtungen enthaltenden Funkterminals RT, die wiederum Funkverbindungen zu weiteren Teilnehmern herstellen.

Die in Figur 2 dargestellte Anordnung betrifft den Fall, daß eine Netzerweiterung geplant ist in einem bereits existierenden festverdrahteten Netzes. Ziel ist es, einen möglichst schnellen und wirtschaftlichen Funknachrichtenzugriff zu allen Bereichen vorzusehen. In einer ersten Stufe der Netzgestaltung, in Erwartung einer niedrigen Teilnehmerzahl, erfolgt dies mit einigen wenigen Bereichen von Spitzenteilnehmerdichten. Bei Verwendung von Zellulartechnik kann das ursprüngliche Netz so geplant werden, daß es einige Basisstationen BS mit großen Zellen besitzt, die an bestehenden Netzknoten der lokalen Vermittlungseinrichtungen angeordnet sind. Damit kann eine Fläche von ein paar hundert km² pro Basisstation abgedeckt werden. Um die Spitzenverkehrsdichten abzudecken, sind, mit minimalem Aufwand, einige zusätzliche Leitungen zu einigen Basisstationen zu verlegen, die entfernt von der Vermittlungsstelle gelegen sind. In dem Maße, wie die Anzahl der Teilnehmer ansteigt, können die einzelnen Basisstationen aufgestockt werden, bis das maximal verfügbare Frequenzspektrum ausgenutzt ist. In diesem Stadium ist bei Nutzung des Konzepts der Zusammenlegung von Geräteteilen die Zahl der Zellen angewachsen, aber es sind nur einfache Basisstationen RT mit der komplexen, zusammengelegten Signalverarbeitungseinrichtung an den bereits vorhandenen Netzknoten angeordnet. Die bereits vorhandene lokale Vermittlungseinrichtung ist natürlich mit neuen Schalteinrichtungen zu erweitern, so daß sie optimal angepaßt ist für alle Teilnehmerzugriffsarten, sei es drahtgebunden oder drahtlos.

## Patentansprüche

1. Zellulares Mobilfunksystem mit zumindest einer Mobilvermittlungsstelle (MSC) und mehreren Basisstationen (BS), die an die Mobilvermittlungsstellen (MSC) mittels Basisstations-Steuerungen (BSC) angeschlossenen sind,
**gekennzeichnet durch**
eine Zusammenlegung von Geräteteilen der Basisstationen (BS) zur Durchführung von basisbandspezifischen Funktionen an einer zentralen Stelle des zellularen Mobilfunksystems, wobei die zusammengelegten Geräteteile mit jeweils in den Basisstationen (BS) verbleibenden Geräteteilen zur Durchführung radiofrequenzspezifischer Funktionen verbunden sind.

2. Zellulares Mobilfunksystem nach Anspruch 1,
**dadurch gekennzeichnet,**
daß die Basisstationen (BS) zumindest eine Funkstation (RT) für die Ausführung der radiofrequenzabhängigen Funktionen aufweisen.

3. Zellulares Mobilfunksystem nach einem der vorhergehenden Ansprüche,
**dadurch gekennzeichnet,**
daß weitere Basisstationen (BS) mit jeweils zumindest einer Funkstation (RT) zum Ausbau des zellularen Mobilfunksystems an die zusammengelegten Geräteteile für die basisbandspezifischen Funktionen angeschlossen sind.

4. Zellulares Mobilfunksystem nach einem der vorhergehenden Ansprüche,
**dadurch gekennzeichnet,**
daß die Geräteteile für die basisbandspezifischen Funktionen in einer der Basisstationen (BS) zusammengelegt sind.

5. Zellulares Mobilfunksystem nach Anspruch 4,
**dadurch gekennzeichnet,**
däß die Basisstation (BS) mit den zusammengelegten Geräteteilen für die basisbandspezifischen Funktionen mit mindestens einer Funkstation (RT), die radiofrequenzspezifische Funktionen ausführt, verbunden ist.

6. Zellulares Mobilfunksystem nach einem der Ansprüche 1 bis 3,
**dadurch gekennzeichnet,**
daß die Geräteteile für die basisbandspezifischen Funktionen in einer der Basisstations-Steuerungen (BSC) zusammengelegt sind.

7. Zellulares Mobilfunksystem nach Anspruch 6,
**dadurch gekennzeichnet,**
daß die Basisstations-Steuerung (BSC) mit den zusammengelegten Geräteteilen für basisbandspezifische Funktionen mit mindestens einer Funkstation (RT), die radiofrequenzspezifische Funktionen ausführt, verbunden ist.

8. Zellulares Mobilfunksystem nach einem der Ansprüche 1 bis 3,
**dadurch gekennzeichnet,**
daß die Geräteteile für die basisbandspezifischen Funktionen in einer Vermittlungseinrichtung, die zumindest eine Mobilvermittlungsstelle (MSC) aufweist, zusammengelegt sind.

9. Zellulares Mobilfunksystem nach einem der vorhergehenden Ansprüche,
**dadurch gekennzeichnet,**
daß die Geräteteile für die basisbandspezifischen Funktionen zur Durchführung kanalorientierter Funktionen wie Kodierung, Verschlüsselung und Fehlerkorrektur vorgesehen sind.

## Claims

1. Cellular mobile radio system having at least one mobile switching centre (MSC) and a plurality of base stations (BS) which are connected to the mobile switching centres (MSC) by means of base station controllers (BSC), characterized by
a combination of equipment components of the base stations (BS) in order to carry out baseband-specific functions at a central point of the cellular mobile radio system, the combined equipment components being connected to, in each case, the equipment components which remain in the base stations (BS) in order to perform radio-frequency-specific functions.

2. Cellular mobile radio system according to Claim 1, characterized in that the base stations (BS) have at least one radio station (RT) for carrying out the radio-frequency-dependent functions.

3. Cellular mobile radio system according to one of the preceding claims, characterized in that further base stations (BS) are connected to, in each case, at least one radio station (RT) in order to expand the cellular mobile radio system to the combined equipment components for the baseband-specific functions.

4. Cellular mobile radio system according to one of the preceding claims, characterized in that the equipment components for the baseband-specific functions are combined in one of the base stations (BS).

5. Cellular mobile radio system according to Claim 4, characterized in that the base station (BS) with the combined equipment components for the baseband-specific functions is connected to at least one radio station (RT) which carries out radio-frequency-specific functions.

6. Cellular mobile radio system according to one of Claims 1 to 3, characterized in that the equipment components for the baseband-specific functions are combined in one of the base station controllers (BSC).

7. Cellular mobile radio system according to Claim 6, characterized in that the base station controller (BSC)with the combined equipment components for baseband-specific-functions is connected to at least one radio station (RT) which carries out radio-frequency-specific functions.

8. Cellular radio mobile system according to one of Claims 1 to 3, characterized in that the equipment components for the baseband-specific functions are combined in a switching centre which has at least one mobile switching centre (MSC).

9. Cellular mobile radio system according to one of the preceding claims, characterized in that the equipment components for the baseband-specific functions are provided for performing channel-oriented functions such as encoding, encryption and/or correction.

## Revendications

1. Système radio mobile cellulaire comportant au moins un centre de commutation du service mobile (MSC) et plusieurs stations de base (BS), qui sont raccordées aux centres de commutation du service mobile (MSC) au moyen de commandes de stations de base (BSC),
caractérisé par
un regroupement d'équipements des stations de base (BS) destinés à la mise en oeuvre de fonctions spécifiques à la bande de base en un lieu central du système radio mobile cellulaire, les équipements regroupés étant reliés à des équipements restant dans les stations de base (BS) et destinés à la mise en oeuvre de fonctions spécifiques aux radiofréquences.

2. Système radio mobile cellulaire selon la revendication 1,
caractérisé par le fait que
les stations de base (BS) comportent au moins une station radio (RT) destinée à la mise en oeuvre des fonctions dépendantes des radiofréquences.

3. Système radio mobile cellulaire selon l'une des revendications précédentes,
caractérisé par le fait que
d'autres stations de base (BS) comportant chacune au moins une station radio (RT), pour l'extension du système radio mobile cellulaire, sont raccordées aux équipements regroupés destinés aux fonctions spécifiques à la bande de base.

4. Système radio mobile cellulaire selon l'une des revendications précédentes,
caractérisé par le fait que
les équipements destinés aux fonctions spécifiques à la bande de base sont regroupés dans une des stations de base (BS).

5. Système radio mobile cellulaire selon la revendication 4,
caractérisé par le fait que
la station de base (BS) comportant les équipements regroupés destinés aux fonctions spécifiques à la bande de base est reliée à au moins une station radio (RT) qui met en oeuvre des fonctions spécifiques aux radiofréquences.

6. Système radio mobile cellulaire selon l'une des revendications 1 à 3,
caractérisé par le fait que
les équipements destinés aux fonctions spécifiques à la bande de base sont regroupés dans une des commandes de station de base (BSC).

7. Système radio mobile cellulaire selon la revendication 6,
caractérisé par le fait que
la commande de station de base (BSC) comportant les équipements regroupés destinés aux fonctions spécifiques à la bande de base est reliée à au moins une station radio (RT) qui met en oeuvre des fonctions spécifiques aux radiofréquences.

8. Système radio mobile cellulaire selon l'une des revendications 1 à 3,
caractérisé par le fait que
les équipements destinés aux fonctions spécifiques à la bande de base sont regroupés dans un dispositif de commutation, qui comporte au moins un centre de commutation du service mobile (MSC).

9. Système radio mobile cellulaire selon l'une des revendications précédentes,
caractérisé par le fait que
les équipements destinés aux fonctions spécifiques à la bande de base sont prévus pour la mise en oeuvre de fonctions spécifiques aux canaux comme le codage, le chiffrement et la correction d'erreur.
